# EUROPEAN PATENT SPECIFICATION

(11) **EP 4 069 871 B1**
(45) Date of publication and mention of the grant of the patent: **30.09.2026**
(21) Application number: 20810998.3
(22) Date of filing: 26.11.2020
(51) Int. Cl.: C21B 9/00, C21B 5/06, C21B 5/00

(54) **METHOD FOR CONVERTING A BLAST FURNACE PLANT**
VERFAHREN ZUM UMWANDELN EINER HOCHOFENANLAGE
PROCÉDÉ DE CONVERSION D'UNE INSTALLATION DE HAUT FOURNEAU

(30) Priority: 03.12.2019 LU 101514
(43) Date of publication of application: 12.10.2022
(73) Proprietor: Paul Wurth S.A., 1122 Luxembourg (LU)
(72) Inventor: KINZEL, Klaus Peter, 5222 Sandweiler (LU); KASS, Gilles, 4986 Sanem (LU)
(74) Representative: Office Freylinger
(86) International application number: PCT/EP2020/083474
(87) International publication number: WO 2021/110528

(56) References cited:
- WO-A1-2019/057930
- GB-A- 2 513 185
- JP-A- 2004 309 067
- JP-A- 2014 005 510

## Description

### Technical Field

The invention relates to a method for converting a blast furnace plant.

### Background Art

Despite alternative methods, like scrap melting or direct reduction within an electric arc furnace, the blast furnace today still represents the most widely used process for steel production. One of the concerns of a blast furnace installation is the blast furnace gas exiting the blast furnace. Since this gas exits the blast furnace at its top it is commonly also referred to as "top gas". While, in the early days, this blast furnace gas may have been allowed to simply escape into the atmosphere, this has long been considered a waste of resources and an undue burden on the environment. One component in the blast furnace gas is CO₂, which is environmentally harmful and is mainly useless for industrial applications. Indeed, the blast furnace gas exiting the blast furnace typically comprises a concentration of CO₂ as high as 20 vol% to 30 vol%. Apart from this, the blast furnace gas usually comprises considerable amounts of N₂, CO, H₂O and H₂. The N₂ content, however, largely depends on whether hot air or (pure) oxygen is used for the blast furnace.

Mainly in order to reduce the amount of coke used, a suggestion was made to recover the blast furnace gas from the blast furnace, treat it to improve its reduction potential and to inject it back into the blast furnace to aid the reduction process. One method for doing this is reducing the CO₂ content in the blast furnace gas by Pressure Swing Adsorption (PSA) or Vacuum Pressure Swing Adsorption (VPSA). PSA/VPSA installations produce a first stream of gas which is rich in CO and H₂ and a second stream of gas rich in CO₂ and H₂O. The first stream of gas can be used as reduction gas and fed back into the blast furnace. One example for this approach is the ULCOS (Ultra Low CO₂ Steelmaking) process, where apart from the recycled first stream of gas, pulverized coal and cold oxygen are fed into the blast furnace. This type of furnace is also referred to as "top gas recycling OBF" (oxygen blast furnace). The second stream of gas can be removed from the installation and, after extraction of the remaining calorific value, disposed of. This disposal controversially consists in pumping the CO₂ rich gas into pockets underground for storage. Furthermore, although PSA/VPSA installations allow a considerable reduction of CO₂ content in the blast furnace gas from about 35 vol% to about 5 vol%, they are very expensive to acquire, to maintain and to operate and they need a lot of space.

It has also been proposed to reform the blast furnace gas in order to obtain a synthesis gas (also referred to as syngas) that can be used for several industrial purposes. According to the most common reforming process, the blast furnace gas is mixed with a fuel gas that contains at least one hydrocarbon (e.g. CH₄ and possibly higher molecular weight hydrocarbons). In a so-called dry reforming reaction, the hydrocarbons of the fuel gas react with the CO₂ in the blast furnace gas to produce H₂ and CO. In a so-called wet reforming reaction, the hydrocarbons react with the H₂O in the blast furnace gas also to produce H₂ and CO. Either way, a synthesis gas is obtained that has a significantly increased concentration of H₂ and CO. It has also been proposed to use this synthesis gas as a reducing gas, which can be recycled, i.e. re-introduced into the blast furnace. Patent documents WO 2019/057930 A and GB 2 513 185 A further disclose alternative methods for converting a blast furnace plant.

According to one process, the syngas is fed into the blast furnace at the tuyere level together with hot blast (i.e. hot air) and/or cold oxygen and auxiliary fuel such as e.g. pulverized coal, natural gas, coke oven gas or others. This type of furnace can also be referred to as a "syngas blast furnace". Hot blast is commonly generated in hot blast stoves, also known as Cowpers. It has also been proposed to burn top gas in order to generate heat, which is transferred to the hot blast stove and from the stove to the hot blast. There also are other possibilities how the syngas can be introduced. For instance, it can be introduced at a shaft level above the tuyere level, while "conventional" hot blast is introduced at the tuyere level. In general, employing syngas reduces the amount of hot blast that is needed for an efficient operation of the blast furnace.

When a blast furnace plant is to be adapted to synthesis gas utilization, this necessitates a variety of changes, like providing reaction vessels for the reforming process, piping and injection systems to transfer the syngas into the blast furnace. Such changes are very costly and should thus be avoided, if possible. On the other hand, the previously necessary number or capacity of hot blast stoves is reduced, wherefore at least some of these could be shut down. All these changes may require the blast furnace to be shut down for some considerable time, which is highly undesirable.

### Technical Problem

It is thus an object of the present invention to enable an efficient conversion of a blast furnace plant for synthesis gas utilization. This object is solved by a method according to claim 1.

### General Description of the Invention

The invention provides a method for converting a blast furnace plant. In particular, the blast furnace plant is converted from a state that does not facilitate utilisation of a synthesis gas in the blast furnace to a state that facilitates such utilisation. In general, this necessitates converting or adapting some elements of the plant as well as constructing new elements and possibly dismantling of old elements.

Initially, i.e. before the conversion begins, the blast furnace plant comprises at least one blast furnace, a plurality of original stoves adapted for generating hot blast, a top-gas supply system for supplying top gas from at least one blast furnace to each original stove, a cold-blast supply system for supplying cold blast to each original stove, a hot-blast supply system for supplying hot blast from each original stove to a hot-blast injection system, which is adapted to inject gas into at least one blast furnace at a tuyere level. Here and in the following, the terms "a" and "at least one" have the same meaning. The original stoves may also be referred to as blast furnace hot stoves, blast furnace stoves or cowpers. The term "original stove" simply designates that these stoves are present at the start of the inventive method. As known in the art, these stoves are a type of regenerative heat exchanger or regenerator.

Each original stove is connected to a blast furnace by the top-gas supply system through which top gas can be supplied to the original stove. The top gas, which may also be referred to as blast furnace gas or BFG, is collected from the blast furnace, and is a CO₂ containing gas. Apart from CO₂, the top gas usually contains other components like CO, H₂O, H₂ or other. In particular, it may be an H₂O containing gas. It may contain some N₂. For conventional top gas, N₂ concentration is generally between 35 and 50 vol%. For enriched top gas, i.e. using syngas, the N₂ concentration is generally lower, for example below 20 vol%, below 10 vol% or below 5 vol%. Normally, the top gas needs to be cleaned in order to reduce its dust content. Also, its H₂O content is preferably drastically lowered by condensation. This can be done for example in a gas cleaning plant where the temperature of the gas is lowered and the water may condensate. The top gas is then supplied to each original stove through the top-gas supply system. Here and in the following, "supply system" refers to a system comprising a single pipe or a system of pipes, which may be branched or unbranched. Furthermore, a supply system may comprise a plurality of portions that are not directly connected with each other. For instance, the top-gas supply system could have a first portion for supplying top gas from a first blast furnace to a first group of original stoves and a second portion for supplying top gas from a second blast furnace to a second group of original stoves. In this case, each of the first and second portions could also be referred as a first or second top-gas supply system, respectively. Apart from at least one pipe, a supply system may comprise at least one device or facility that is not a pipe, e.g. a gas cleaning plant, a gas holder, a condenser or a compressor for increasing the pressure of the gas. It will be understood that such devices may be interposed within a supply system. For example, the top gas may be supplied by the top-gas supply system not directly from the blast furnace, but via at least one interposed device. The supply system could also be referred to as a "distribution system" or a "supply". In some cases, no interposed device is present, so that the supply system can also be referred to as a "piping".

The top gas is used for heating the respective original stove. On the one hand, residual heat in the top gas originating from the blast furnace may be used. Furthermore, the top gas may be burned in a burner of the original stove to generate heat. Either way, heat is transferred to the original stove (normally to checker bricks inside the stove). Subsequently, this heat may at least partially be transferred to cold blast received through the cold-blast supply system, whereby hot blast is generated. This hot blast is then transferred through the hot-blast supply system to the at least one blast furnace or, more specifically, to a hot-blast injection system, which is adapted to inject gas into the at least one blast furnace at a tuyere level. The tuyere level normally corresponds to the melting zone of the blast furnace. In a typical embodiment, the hot-blast injection system comprises a bustle pipe that surrounds the blast furnace and a plurality of tuyeres that originate from the bustle pipe and extend into the blast furnace.

Normally, the hot blast, which is essentially hot air, is combined with an oxygen-rich gas that may be supplied to the hot-blast injection system through an oxygen supply system. Alternatively, the oxygen-rich gas can be supplied to the original stove(s) as part of the cold blast or together with the cold blast. I.e. an oxygen supply system for supplying the oxygen-rich gas can be connected to the cold-blast supply system. The oxygen-rich gas is in general a gas that has an O₂ concentration significantly higher than air. Normally, the oxygen-rich gas consists mainly of O₂, i.e. it has an O₂ concentration of more than 50 vol%. Preferably, it contains at least 60 vol%, preferably at least 80 vol%, more preferably at least 90 vol% of O₂. In some cases, the oxygen-rich gas may even be referred to as "oxygen", although it is understood that minor concentrations (e.g. <5 vol%) of other components like N₂ can hardly be avoided. Optionally, an auxiliary fuel like pulverized coal, oil, natural gas, coke oven gas etc. can also be injected together with the hot blast.

The inventive method comprises at least the steps described in the following. In particular, the steps may be performed in the sequence in which they are mentioned. However, it is conceivable that some steps may be performed in a different sequence or simultaneously.

According to one step of the method, which is at least partially (if not entirely) performed while operating the original stoves to generate hot blast, at least one syngas stove is constructed. This syngas stove is adapted to produce a syngas by reforming a gas combination of a CO₂- and/or H₂O-containing industrial gas and a hydrocarbon-containing fuel gas, and a syngas supply system is constructed, which is adapted for connecting at least one syngas stove to at least one blast furnace. In other words, the at least one syngas stove is constructed without interrupting the original operation of the blast furnace plant. The syngas stove is also a regenerator working by the same principle as the original stoves. In contrast to the original stoves, though, the syngas stove is adapted from the start to produce a synthesis gas or syngas, which results from a reforming reaction of a gas combination. This reforming reaction may seriously damage a conventional hot stove, depending on its original components. The main differences between the syngas stove and the original stoves indeed generally pertain to the refractory lining and possibly mechanical components.

The gas combination comprises a CO₂- and/or H₂O-containing industrial gas and a hydrocarbon-containing fuel gas. The fuel gas may be e.g. a coke oven gas (COG), a natural gas, a biogas or a combination or mixture of any of these gases. It normally has a high concentration of low-molecular hydrocarbons, in particular CH₄. The industrial gas and the fuel gas may be supplied separately or together. In the gas combination, the industrial gas and the fuel gas can be more or less well mixed. Normally, the gas combination can also be referred to as a gas mixture. In some cases, it may be sufficient e.g. to inject the two gases into the stove, so that mixing occurs more or less passively by convection and/or diffusion. It is understood, though, that the chemical reaction is enhanced by a higher degree of mixing.

Inside the syngas stove, the gases are subjected to a reforming process, thereby producing the synthesis gas, which normally contains a significant amount of CO and H₂. The chemical mechanism of the reforming process is not limited within the scope of the invention, but it normally comprises at least that the CO₂ content of the industrial gas reacts with the hydrocarbon in the fuel gas, e.g. according to the following reaction: CO₂ + CH₄ → 2 H₂ + 2 CO. This may also be referred to as dry reforming. Also, the H₂O content of the blast furnace gas may react with the hydrocarbon in the fuel gas, e.g. according to the following reaction: H₂O + CH₄ → 3 H₂ + CO. This may also be referred to as wet reforming. The reforming process normally requires elevated temperatures, e.g. above 800°C. These temperatures are provided by heating the syngas stove in advance. Like with the original stoves, heating may be achieved by burning top gas and/or using residual heat in the top gas. The reforming process may also be carried out under elevated pressure. In this case, the gas mixture may be compressed or the blast furnace gas and fuel gas can be compressed individually and be combined. The reforming process can optionally be aided by a catalyst that is usually introduced into the stove.

However, the newly constructed syngas stove is not immediately used for syngas production. In another step of the method, a first syngas stove is connected to the top-gas supply system, the cold-blast supply system and the hot-blast supply system and is operated for hot blast generation. In other words, the first syngas stove is (temporarily) used for generating hot blast, i.e. it is operated like the original stoves. This is possible since heating cold blast to generate hot blast is less harmful to the inside of the stove than supporting the reforming process. Furthermore, the flow rate of syngas to be used in the blast furnace is generally much lower than the flow rate of hot blast. However, the production of syngas requires a much higher energy input per Nm³ of syngas as the production of hot blast. For this reason, the sizing of the syngas stove and hot blast stove are similar, in particular the heat capacity and the burner part can be of similar size.

In another step, which is normally performed after starting to operate the first syngas stove to generate hot blast, a first original stove is disconnected from the top-gas supply system, the cold-blast supply system and the hot-blast supply system. It is understood that the first original stove is shut down before it is disconnected from the above-mentioned supply systems. Here and in the following, "disconnecting" and generally refers to preventing any gas exchange, which could be achieved by closing a valve. However, it generally refers to dismantling a portion of the supply system by which the respective stove is connected to the supply system.

After it has been disconnected, the first original stove is converted to adapt it for producing syngas. As already indicated above, the overall structure of the first original stove does not need to be changed for this adaptation. This conversion refers to adapting the quality of/replacing the refractory lining and/or the support of its refractory lining and/or its mechanical components, such as e.g. valves. Here and in the following, "converting" an original stove always refers to adapting it for producing syngas.

After the first original stove has been converted, it is connected to the top-gas supply system. As will become apparent below, the first original stove, which is now adapted for syngas production, may either be directly used for producing syngas or it may temporarily be used for generating hot blast.

Either way, the method further comprises disconnecting the first syngas stove from the cold-blast supply system and the hot-blast supply system, connecting the first original stove and the first syngas stove to a gas-combination supply system for supplying the gas combination and via the syngas supply system to the blast furnace. In other words, hot-blast generation by the first syngas stove is stopped and therefore it can be disconnected from the cold-blast supply system and the hot-blast supply system. If necessary, it could also be temporarily disconnected from the top-gas supply system. The first syngas stove and the first original stove are connected to a gas-combination supply system for supplying the gas combination. Normally, both gases are supplied together, i.e. they have normally mixed at least to some extent before reaching the stove. It would be conceivable, though, that the gas-combination supply system comprises separate pipes for the two gases. In order to compress the gas combination as mentioned above, the gas-combination supply system may comprise at least one compressor. Furthermore, the first syngas stove and the first original stove are connected to the blast furnace via the syngas supply system. On the one hand, this may refer to connecting the stoves to the syngas supply system; on the other hand, it may refer to connecting the syngas supply system to the blast furnace so that injection of the syngas into the blast furnace is facilitated.

Once the above-mentioned steps have been performed, the first original stove and the first syngas stove are operated to produce syngas and the syngas is supplied to the blast furnace via the syngas supply system. Without limiting the scope of the invention, the syngas is normally introduced into the blast furnace as a reduction gas. In particular, it can be introduced together with an oxygen-rich gas, which includes the possibility to supply an oxygen-rich hot blast. It is understood that by recycling, i.e. reforming and re-introducing, the top gas, the CO₂ emissions of the blast furnace can be greatly reduced. Also, since the oxygen-rich gas contains significantly less N₂ than air, the concentration of reducing gases as CO and H₂ is higher, which helps to increase the productivity of the blast furnace.

If an auxiliary fuel is injected together with the hot blast as mentioned above, this fuel injection can usually continue during and after the conversion. However, in some cases, auxiliary fuel injection can be (or needs to be) reduced or even stopped. For instance, if an increased amount of top gas can be converted to syngas and a high amount of syngas is injected into the furnace, this may make the auxiliary fuel (e.g. pulverized coal) obsolete.

It will be understood that employing the first syngas stove temporarily as a "backup" for generating hot blast, the necessary shutdown time of the blast furnace (or any time of reduced efficiency) is minimized. It is also beneficial that the first syngas stove is not obsolete after it has served as a backup but can be used to produce syngas.

To avoid any unwanted interactions of the syngas with the hot blast outside the blast furnace, the method may comprise constructing a syngas injection system that is adapted to inject gas into the blast furnace and connecting the syngas supply system to the syngas injection system. The syngas injection system may be constructed before, after or while the syngas supply system is constructed. Like the hot-blast injection system, it may comprise a (second) bustle pipe surrounding the blast furnace as well as a plurality of tuyeres, lances or injectors that originate from the bustle pipe and extend into the blast furnace. When the syngas is supplied via the syngas supply system, it is injected separate from the hot blast.

In some embodiments, the hot-blast injection system is made obsolete, e.g. if operation of the blast furnace plant is changed to pure oxygen injection (i.e. injection of an oxygen-rich gas, in particular pure oxygen). In such a case, constructing the syngas injection system may comprise at least partially converting the hot blast injection system to adapt it for syngas injection. For example, the existing bustle pipe can be converted by changing the refractory and new syngas tuyeres can be installed. Inside each syngas tuyere, a separate lance can be disposed through which pure oxygen can be injected.

Even though the syngas injection system is separate from the hot-blast injection system (if still present), it may be adapted to inject gas at the tuyere level. Roughly speaking, the hot blast injection system and the syngas injection system may both be disposed at the tuyere level, thus allowing the syngas and the hot blast to be injected separately but in the same region of the blast furnace. The syngas injection system may have dedicated tuyere stocks that are disposed alternatingly with the tuyeres of the hot-blast injection system. Alternatively or additionally, the syngas injection system may be adapted to inject gas at a shaft level above the tuyere level. The shaft level largely corresponds to a reduction zone of the blast furnace, which normally has significantly lower temperatures than the melting zone. E.g. the temperatures at the shaft level may be between 800°C and 1100°C. Optionally, the synthesis gas may be cooled before it is introduced through the syngas injection system or it may be mixed with another gas that has a lower temperature but e.g. a similar composition. Suitable gases for mixing with the syngas include BOF (basic oxygen furnace) gas and blast furnace gas. These measures may prevent any detrimental effect of the syngas on the temperature distribution inside the blast furnace.

Preferably, the syngas injection system is at least partially constructed during operation of the at least one blast furnace. In other words, the blast furnace does not have to be shut down for the entire construction time of the syngas injection system. For example, a bustle pipe of the syngas injection system can be constructed while the blast furnace is in operation, since it is disposed entirely outside the blast furnace. Any components of the injection system that project into the interior of the blast furnace (like the abovementioned tuyeres, lances or injectors) require a temporary shutdown of the blast furnace to be installed or constructed. However, this normally takes a relatively short amount of time.

While the inventive method aims to minimize the investment cost for converting an existing installation to an installation with syngas production, it also aims to minimize the shutdown time of the blast furnace. Some method steps however normally have to be performed during a shutdown of at least one blast furnace. For instance, connecting a syngas stove to the top-gas supply system, the cold-blast supply system and the hot-blast supply system may require a shutdown. This shutdown may be performed for connecting the first syngas stove as well as to connecting other syngas stoves mentioned below. Another step that may require a shutdown is connecting a stove to the syngas supply system. This may refer to a (converted) original stove as well as to a syngas stove. Also, as already mentioned above, connecting the syngas injection system to the blast furnace requires the blast furnace to be shut down. This refers to installing and/or constructing any components of the syngas injection system that are introduced into the interior of the blast furnace. Also, if the hot-blast injection system is converted to adapt it for syngas injection, this is mostly only possible during a shutdown. Unless any of the steps that require a shutdown are performed sequentially without any other steps in between, it is preferred that operation of the blast furnace is resumed after each step.

In a preferred embodiment, the method comprises the following steps, which may be performed after disconnecting the first syngas stove from the cold-blast supply system and the hot-blast supply system. In one step, a second syngas stove is connected to the top-gas supply system, the syngas supply system and the gas-combination supply system. It is understood that this second syngas stove is also adapted for syngas production and may optionally have the same size and configuration as the first syngas stove. While one important function of the first syngas stove is to maintain a sufficient hot-blast generation during the conversion of the first original stove, this does not apply to the second syngas stove. Rather, it is solely intended for syngas production and to guarantee a sufficient production rate as the second syngas stove, the first syngas stove and at least one converted original stove are operated to produce syngas. Therefore, the second syngas stove is not connected to the cold-blast supply system or the hot-blast supply system. In another step, the second syngas stove, along with the first syngas stove and the first original stove, is operated to produce syngas and the syngas is supplied to the at least one blast furnace via the syngas supply system. In other words, even if some original stoves are still used to generate hot blast (and are therefore not converted), at least the above-mentioned three stoves can be used for syngas production. It should be noted that the second syngas stove can be connected to the syngas supply system and the gas-combination supply system immediately before, after or simultaneously with the first syngas stove and the first original stove. It is preferred in this embodiment that all three begin syngas production at the same time. Therefore, the second syngas stove is normally connected to the syngas supply system and the gas-combination supply system before the first syngas stove and the first original stove begin syngas production.

It is conceivable that the second syngas stove is constructed at the same time or even before the first syngas stove is constructed. However, it is generally more efficient for the total conversion schedule of the blast furnace plant if the second syngas stove is constructed after operation of the first syngas stove to generate hot blast has started. At this stage, a sufficient hot-blast generation is maintained by the operation of the first syngas stove. In particular, the second syngas stove may be constructed simultaneously with the conversion of the first original stove.

Especially in those cases where the second syngas stove is constructed and put into operation, it may be sufficient to convert only the first original stove. In other cases, it may be necessary or desirable to convert a second original stove. According to such an embodiment, the method comprises the following steps, which are performed after converting the first original stove. In one step, the first original stove is connected to the top-gas supply system, the cold-blast supply system and the hot-blast supply system. It is understood that these connections facilitate hot-blast generation with the first original stove. In another step, a second original stove is disconnected from the top-gas supply system, the cold-blast supply system and the hot-blast supply system. Afterwards, the second original stove is converted to adapt it for producing syngas. At least while the second original stove is being converted, the first original stove and the first syngas stove are operated to generate hot blast. This operation may begin before the conversion of the second original stove and/or it may end after the conversion is completed. In yet another step, the first syngas stove and the first original stove are disconnected from the cold-blast supply system and hot-blast supply system, and the first original stove, the second original stove and the first syngas stove are connected to the gas-combination supply system and via the syngas supply system to the at least one blast furnace. After this step, all necessary connections have been established. Afterwards, the first original stove, the second original stove and the first syngas stove are operated to produce syngas and the syngas is supplied to the at least one blast furnace via the syngas supply system.

After the final step of the above-mentioned embodiment, three stoves are operated to produce syngas, which is usually sufficient for an effective operation of the (at least one) blast furnace. According to a common configuration, the blast furnace plant may initially comprise three original stoves. After converting the first and second original stove, the remaining, unconverted original stove usually has insufficient capacity to maintain a hot-blast supply for the blast furnace. Mostly, the second original stove is only converted if hot-blast generation is not intended for the future operation of the blast furnace. On the one hand, the remaining original stove could be dismantled. Alternatively, it could be also be used for syngas production. According to one embodiment, the method comprises the following steps. In one step, a third original stove is disconnected from the top-gas supply system, the cold-blast supply system and the hot-blast supply system. In another step, the third original stove is converted to adapt it for producing syngas. Afterwards, the third original stove is connected to the gas-combination supply system and via the syngas supply system to the at least one blast furnace. Once these connections have been applied, the third original stove is operated to produce syngas and the syngas is supplied to the at least one blast furnace via the syngas supply system. The steps may be performed after the first original stove, the second original stove and the first syngas stove have started producing syngas. As far as possible, they may be performed during operation of the first original stove, the second original stove and the first syngas stove to produce syngas. It is understood, though, that some steps require a temporary shutdown of the blast furnace plant. However, apart from the third original stove, no stove needs to be connected or disconnected, i.e. the connections of the other stoves can be maintained during the above-mentioned steps.

Although it is conceivable that the industrial gas and the fuel gas could be supplied separately to the respective stove or that these gases could be allowed to mix to some degree within the gas-combination supply system, it is often beneficial to use a dedicated mixing chamber where the gas combination is mixed to form a gas mixture before it is introduced into the stove. Accordingly, the method preferably comprises constructing a mixing chamber and connecting the mixing chamber to a fuel-gas supply system for supplying the fuel gas and to the gas-combination supply system. The term "mixing chamber" is not to be construed in that active mixing of the two gases is performed inside the chamber. Rather, the gases could be allowed to mix passively due to convection, diffusion or other processes. It is understood that the mixing chamber needs a further connection to receive the industrial gas, which will be discussed below.

Normally, the top gas is used as the industrial gas. It is a CO₂-containing gas that is available within the blast furnace plant in abundance. Accordingly, the method preferably comprises connecting the top-gas supply system to the mixing chamber and supplying the top gas from a blast furnace as the industrial gas to the mixing chamber. While reference is made to "the top gas", it will be understood that the top gas as collected from the top of the blast furnace needs to be cleaned before it can be used for further purposes. In this context, it is possible to compress the top gas before it is introduced into the mixing chamber. In such a case, connecting the top-gas supply system to the mixing chamber comprises constructing at least one compressor, and supplying the top gas comprises compressing the top gas. Alternatively, the gas-combination supply system may comprise at least one compressor.

As already mentioned in context with the (common) configuration of three original stoves, all original stoves may be converted to adapt them for producing syngas. This may of course be applicable to cases where more or less than three original stoves are present. Alternatively, some original stoves may be converted while others remain adapted for hot-blast generation.

The blast furnace plant may comprise a single blast furnace so that all syngas stoves and all original stoves - before and after conversion - are connected to one and the same blast furnace. However, the method is also applicable to blast furnace plants with a plurality of blast furnaces. According to one embodiment, the blast furnace plant comprises a first blast furnace connected to a first group of original stoves via a first hot-blast supply system and a first top-gas supply system and a second blast furnace connected to a second group of original stoves via a second hot-blast supply system and a second top-gas supply system. It is understood that each of the first and second group of original stoves can be connected to a (first or second, respectively) cold-blast supply system. The original stoves within one group may be disposed relatively close together, but the term "group" is not to be construed as limiting as to the spatial arrangement of the original stoves.

In this embodiment, the method comprises at least the following steps. In one step, the first syngas stove is connected to at least one of the first and the second top-gas supply system. In particular, it may be connected to the first top-gas supply system. As described above, the first syngas stove is also connected to at least one hot-blast supply system and at least one cold-blast supply system. In particular this may be the first hot-blast supply system and the first cold-blast supply system. After that, all original stoves of the first group are converted and connected to the gas-combination supply system and the syngas supply system. In other words, the first original stove and, where applicable, the second and third original stove are selected from the first group. These original stoves are converted one after another as described above. This normally does not necessitate the construction of a second syngas stove. After all the original stoves in the first group have been converted, they are adapted for syngas production. As mentioned above, they still can be operated to generate hot blast, but this is not their primary function. Therefore, the first hot-blast supply system loses its purpose to supply hot blast to the first blast furnace. Accordingly, the second hot-blast supply system is connected the first blast furnace. The second hot-blast supply system normally branches so that hot blast can be supplied to the first blast furnace and the second blast furnace. At this stage, the first hot-blast supply system as well as the first cold-blast supply system can be dismantled. In a further step of the method, the syngas supply system is connected to the first blast furnace and the second blast furnace. The syngas supply system may be connected to either blast furnace by a (first or second, respectively) hot-blast injection system or by a dedicated (first or second, respectively) syngas injection system.

It is preferred that after finishing converting, all original stoves of the first group are operated to produce syngas while all original stoves of the second group are operated to generate hot blast. In other words, all original stoves of the first group have been converted and are now used to supply both blast furnaces with syngas while all original stoves of the second group remain adapted for hot-blast generation and supply both blast furnaces with hot blast.

### Brief Description of the Drawings

Preferred embodiments of the invention will now be described, by way of example, with reference to the accompanying drawings, in which:
- Fig.1: is a schematic view of a first blast furnace plant before application of the inventive method;
- Figs 2-4: illustrate different stages of a first embodiment of the inventive method;
- Figs 5-9: illustrate different stages of a second embodiment of the inventive method;
- Fig.10: is a schematic view of a second blast furnace plant before application of the inventive method; and
- Figs 11-15: illustrate different stages of a third embodiment of the inventive method.

### Description of Preferred Embodiments

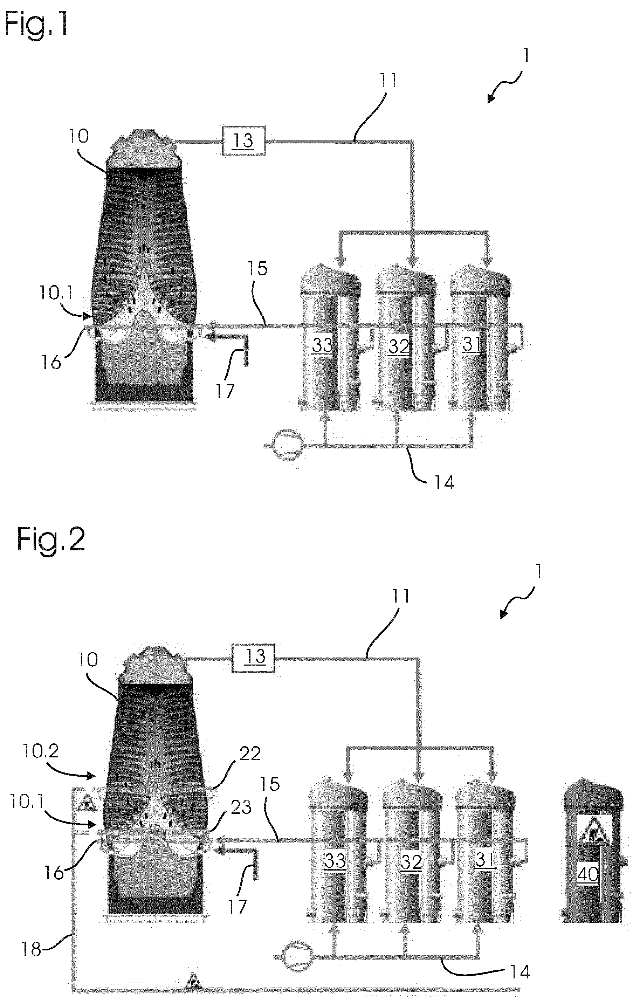

Fig.1 shows a schematic representation of a blast furnace plant 1. It comprises a blast furnace 10, the general operation of which is known in the art and therefore will not be explained here. A hot-blast injection system 16 is disposed at a tuyere level 10.1 of the blast furnace 10. The hot-blast injection system 16 is connected to a hot-blast supply system 15 and to an oxygen supply system 17. The oxygen supply system 17 provides an oxygen-rich gas, which e.g. may have an O₂ concentration of 95 vol% and an N₂ concentration of 5 vol%. As an alternative to the embodiment shown here, the oxygen supply system 17 could be connected to the cold-blast supply system 14, so that oxygen-rich cold blast is supplied to the original stoves 31 - 33 and oxygen-rich hot blast is supplied to the hot-blast injection system 16. Indeed, generally speaking, if hot blast is used in the blast furnace process, the oxygen supply system feeds oxygen into the cold blast, i.e. upstream of the stoves. If, on the other hand, the blast furnace is operated as a pure oxygen furnace, the supply system feeds oxygen directly to the blast furnace, at tuyere level, as represented in Fig.1

Furthermore, an auxiliary fuel like pulverized coal or oil can also be injected with the hot blast, which also applies to the second and third embodiment described below. The hot-blast supply system 15 is connected to three original stoves 31-33, which are configured as hot-blast stoves that receive cold blast from a cold-blast supply system 14 and heat it to generate hot blast. Each of the original stoves 31-33 is connected to a top-gas supply system 11 that receives a top gas (or blast furnace gas) from the top of the blast furnace 10. The recovered top gas may, in the conventional operation of the blast furnace using hot blast, have a N₂ concentration below 50 vol%, a CO and CO₂ concentration of about 23 vol% each and about 6 vol% of H₂. For a blast furnace being operated using syngas, the recovered top gas may have a N₂ concentration below 5 vol%, a CO and CO₂ concentration of about 40 vol% each and about 15 vol% of H₂. The recovered top gas is fed to the top-gas supply system 11 and is cleaned in a gas cleaning plant 13, mostly for removing particulate matter from the gas and possibly condensing a part of the vapour contained in the top gas. The top gas is used to heat the original stoves 31-33.

Figs 2-4 illustrate a first embodiment of an inventive method for converting the blast furnace plant 1 to adapt it for syngas utilisation. As shown in Fig.2, a first syngas stove 40 is constructed, which has basically the same setup as the original stoves 31-33, that is adapted to support a reforming process, in which a gas combination of a CO₂-containing industrial gas (in this case, the top gas) and a hydrocarbon-containing fuel gas (in this case, coke oven gas, optionally mixed or combined with natural gas) react to produce a syngas (or synthesis gas). The chemical mechanism of the reforming process is not limited within the scope of the invention, but it normally comprises at least that the CO₂ content of the industrial gas reacts with the hydrocarbon in the fuel gas, e.g. according to the following reaction: CO₂ + CH₄ → 2 H₂ + 2 CO. This may also be referred to as dry reforming. Also, the H₂O content of the industrial gas may react with the hydrocarbon in the fuel gas, e.g. according to the following reaction: H₂O + CH₄ → 3 H₂ + CO. This may also be referred to as wet reforming. The reforming process normally requires elevated temperatures, e.g. above 800°C. The elevated temperatures and the chemical properties of the substances involved in the reforming process may seriously damage either of the original stoves 31-33 depending on their original configuration/quality. The first syngas stove 40 on the other hand, is adapted from the start to withstand the conditions of the reforming process, which is generally due to a different type of refractory lining and possibly a different type of support for the checker bricks.

As can also be seen in Fig.2, a syngas supply system 18 is constructed, which is adapted for connecting the first syngas stove 40 to the blast furnace 10. Also, an upper syngas injection system 22 is constructed at a shaft level 10.2 above the tuyere level 10.1 and a lower syngas injection system 23 is constructed at the tuyere level 10.1. The syngas injection systems 22, 23 each comprise a bustle pipe and injectors that protrude into the blast furnace 10, wherefore the blast furnace 10 needs to be shut down temporarily during the installation of the injectors. Apart from this temporary shutdown, operation of the blast furnace 10 is not interrupted. In the stage shown in Fig.2, the syngas supply system 18 is neither connected to the syngas injection systems 22, 23 nor to any of the stoves 31-33, 40.

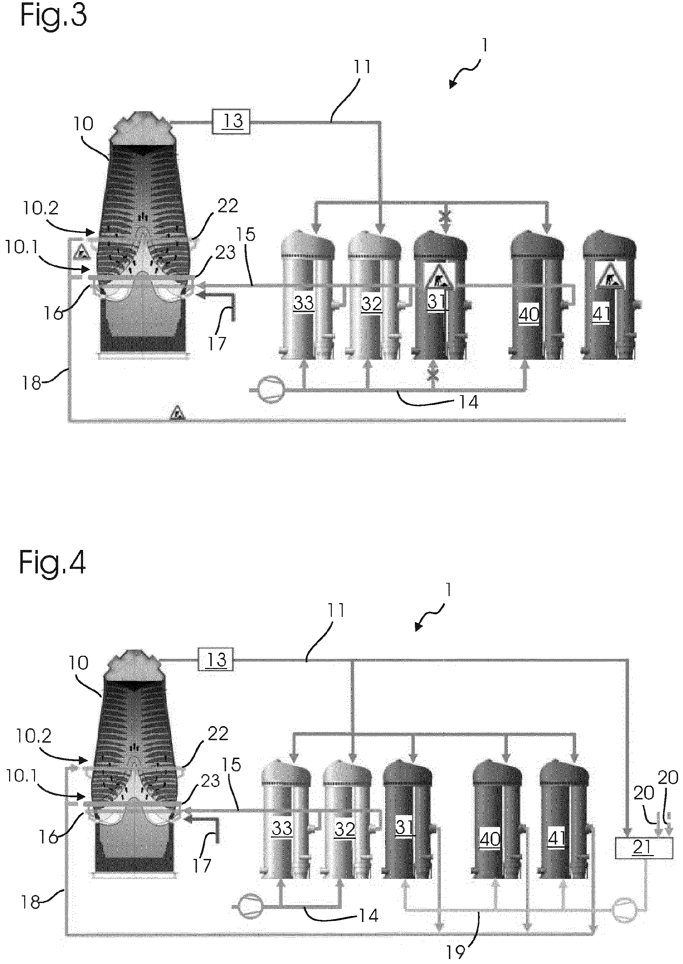

Fig.3 shows another stage of the method, where a first original stove 31 is disconnected from the top-gas supply system 11, the cold-blast supply system 14 and the hot-blast supply system 15, while the first syngas stove 40 is connected to these supply systems 11, 14, 15. Again, a temporary shutdown of the blast furnace 10 may be required, which is only for a limited time period, though. The first syngas stove 40 is now operated to generate hot blast, which is possible since the conditions for hot-blast generation are less severe than those for the reforming process. Meanwhile, the first original stove 31 is converted to adapt it for syngas production. This conversion may pertain, if necessary among other, to replacing the refractory lining and/or possibly adapting the support of the refractory lining and/or by replacing/adapting the mechanical components. Also, a second syngas stove 41 is constructed, which is also adapted for syngas production and may be identical to the first syngas stove 40.

Fig.4 illustrates a final stage of the method for converting the blast furnace plant 1. The first original stove 31 and the second syngas stove 41 are connected to the top-gas supply system 11, the first original stove 31, the first syngas stove 40 and the second syngas stove 41 are connected to the syngas supply system 18, which is also connected to the syngas injection systems 22, 23. Furthermore, they are connected to a gas-combination supply system 19 that supplies a gas mixture of the top gas and the coke oven gas (and, optionally, the natural gas). A mixing chamber 21 is constructed, to which the gas-combination supply system 19 is connected. Furthermore, the mixing chamber is connected to the top-gas supply system 11, through which it receives the top gas, and to a fuel-gas supply system 20, through which it receives the coke oven gas (and, optionally, the natural gas, as indicated by the dashed arrow). Since the reforming reaction normally requires an elevated pressure, the gas-combination supply system 19 may comprise a compressor. Alternatively, each of the top-gas supply system 11 and the fuel-gas supply system 20 may comprise a compressor, so that the top-gas and the fuel gas are introduced into the mixing chamber 21 under elevated pressure. For sake of simplicity, the compressors are not shown here and in the following.

The blast furnace plant 1 can resume its operation in a modified form, where a second and third original stove 32, 33 are operated to generate hot blast, which is supplied to the blast furnace 10 at the tuyere level 10.1, while the first original stove 31 and the syngas stove is 40, 41 are operated to produce syngas, which is supplied via the syngas supply system 18 and is injected through the upper syngas injection system 22 at the shaft level 10.2 and through the lower syngas injection system 23 at the tuyere level 10.1.

While in the embodiment shown in Figs 2-4, and upper syngas injection system 22 is constructed at the shaft level 10.2 and additionally a lower syngas injection system 23 is constructed at the tuyere level 10.1, it would be possible to modify this embodiment so that only a single the injection system 22, 23 is constructed either at the tuyere level 10.1 or at the shaft level 10.2 of the blast furnace 10.

If an auxiliary fuel is injected at the tuyere level 10.1 as mentioned above, this fuel injection can usually continue during and after the conversion. However, in some cases, depending on the amount of syngas produced, auxiliary fuel injection needs to be reduced or even stopped. For instance, if the coke oven gas is supplemented by natural gas, an increased amount of top gas can be converted to syngas, which may make the auxiliary fuel (e.g. pulverized coal) obsolete. This also applies to the second and third embodiment discussed below.

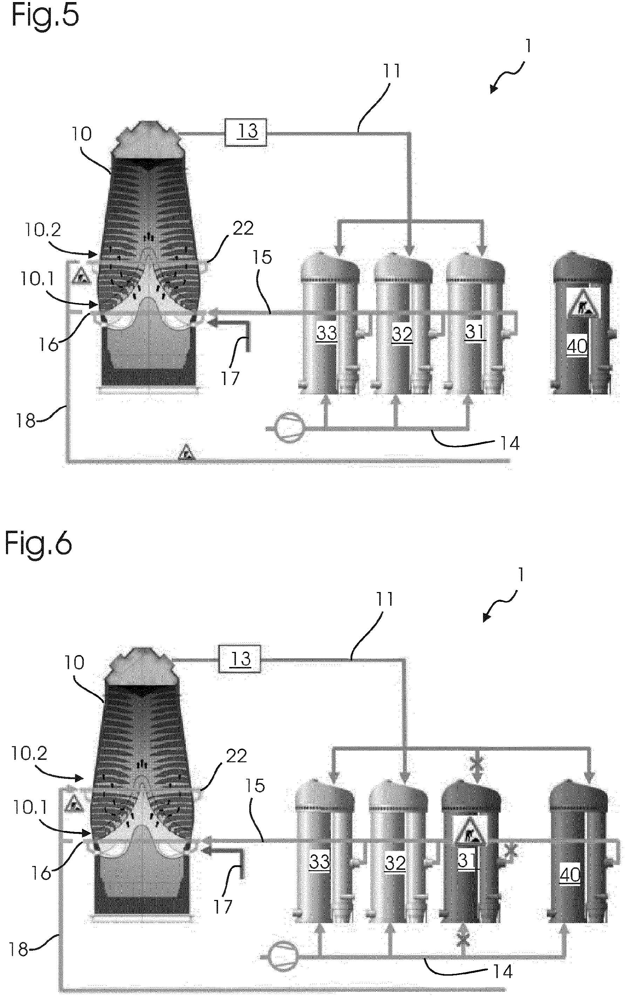

Figs 5-9 illustrate a second embodiment of a method for converting the blast furnace plant 1 shown in Fig.1. Fig.5 shows a first stage of the conversion, which is similar to the stage shown in Fig.2 and insofar will not be described again. In this case, though, only an upper syngas injection system 22 at the shaft level 10.2 is constructed. In a second stage that is shown in Fig.6, the first syngas stove 40 is connected to the top-gas supply system 11, the cold-blast supply system 14 and the hot-blast supply system 15 and is operated to generate hot blast. Meanwhile, the first original stove 31 is disconnected from the top-gas supply system 11, the cold-blast supply system 14 and the hot-blast supply system 15, whereafter it is converted to adapt it for syngas production.

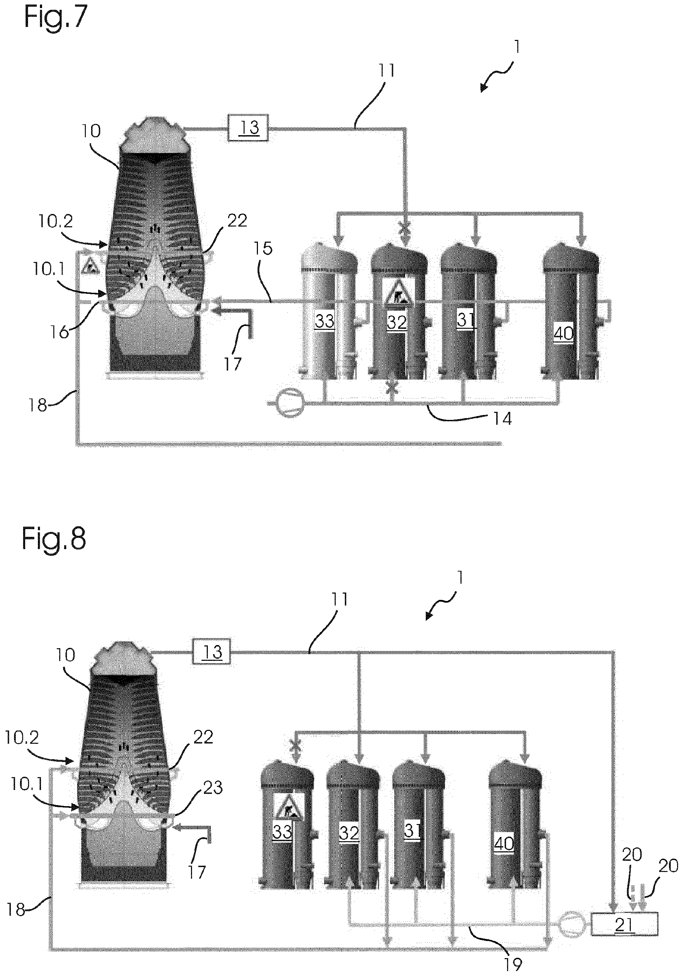

In a third stage that is shown in Fig.7, the first original stove 31, which has been converted, is re-connected to the top-gas supply system 11, the cold-blast supply system 14 and the hot-blast supply system 15 and is operated to generate hot blast. Meanwhile, the second original stove 32 is disconnected from the top-gas supply system 11, the cold-blast supply system 14 and the hot-blast supply system 15, whereafter it is converted to adapt it for syngas production.

In a fourth stage (shown in Fig.8), the second original stove 32, which has been converted, is re-connected to the top-gas supply system 11. The mixing chamber 21 is constructed and connected to the top-gas supply system 11 and to the fuel-gas supply system 20. The hot-blast injection system 16 is converted into a lower syngas injection system 23, which comprises adapting the bustle pipe and the tuyere stocks and installing separate lances through which the oxygen-rich gas from the oxygen supply system 17 is injected. Also, the first original stove 31, the second original stove 32 and the first syngas stove 40 are connected to the syngas supply system 18 and via the gas-combination supply system 19 to the mixing chamber 21. The syngas supply system 18 is connected to the upper syngas injection system 22 and to the lower syngas injection system 23. The first and second original stove 31, 32 and the first syngas stove 40 are operated to produce syngas, which is supplied to the blast furnace at the shaft level 10.2 via the syngas supply system 18 and the syngas injection systems 22, 23. Meanwhile, the third original stove 33 is disconnected from the top-gas supply system 11. The cold-blast supply system 14 and the hot-blast supply system 15 are dismantled. The third original stove 33 is converted to adapt it for syngas production.

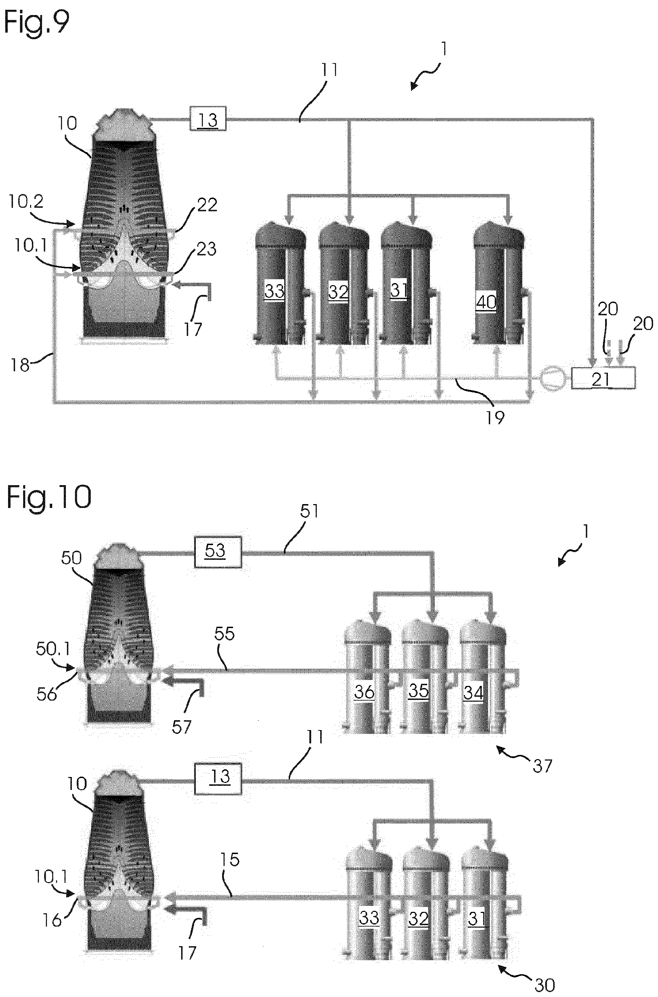

Fig.9 shows a final stage of the conversion process. The third original stove 33 is connected to the top-gas supply system 11, the syngas supply system 18 and the gas-combination supply system 19. Afterwards, it is operated to produce syngas. As can be seen by comparison of Fig.4 and Fig.9, the second embodiment completely eliminates hot-blast generation so that only the oxygen-rich gas is injected at the tuyere level 10.1 via the oxygen supply system 17 and the lower syngas injection system 23. All original stoves 31-33 and have been converted and are operated to produce syngas, which is injected via the syngas supply system 18 and the upper syngas injection system 22 at the shaft level 10.2 and the lower syngas injection system 23 at the tuyere level 10.1.

Fig.10 shows a second embodiment of a blast furnace plant 1, which basically comprises two blast furnace plants as shown in Fig.1. It comprises a first blast furnace 10 and a second blast furnace 50. A first hot-blast injection system 16 is disposed at a tuyere level 10.1 of the first blast furnace 10. The first hot-blast injection system 16 is connected to a first hot-blast supply system 15 and to a first oxygen supply system 17. The first hot-blast supply system 15 is connected to a first group 30 of original stoves 31-33, which receive cold blast from a first cold-blast supply system (which is not shown for sake of clarity) and heat it to generate hot blast. Advantageously, the hot blast is oxygen-enriched. Each of the original stoves 31-33 of the first group 30 is connected to a first top-gas supply system 11 that receives a top gas from the first blast furnace 10. Furthermore, a second hot-blast injection system 56 is disposed at a tuyere level 50.1 of the second blast furnace 50. The second hot-blast injection system 56 is connected to a second hot-blast supply system 55 and to a second oxygen supply system 57. The second hot-blast supply system 55 is connected to a second group 37 of original stoves 34-36, which receive cold blast from a second cold-blast supply system (not shown) and heat it to generate hot blast. Each of the original stoves 34-36 is connected to a second top-gas supply system 51 that receives a top gas from the second blast furnace 50.

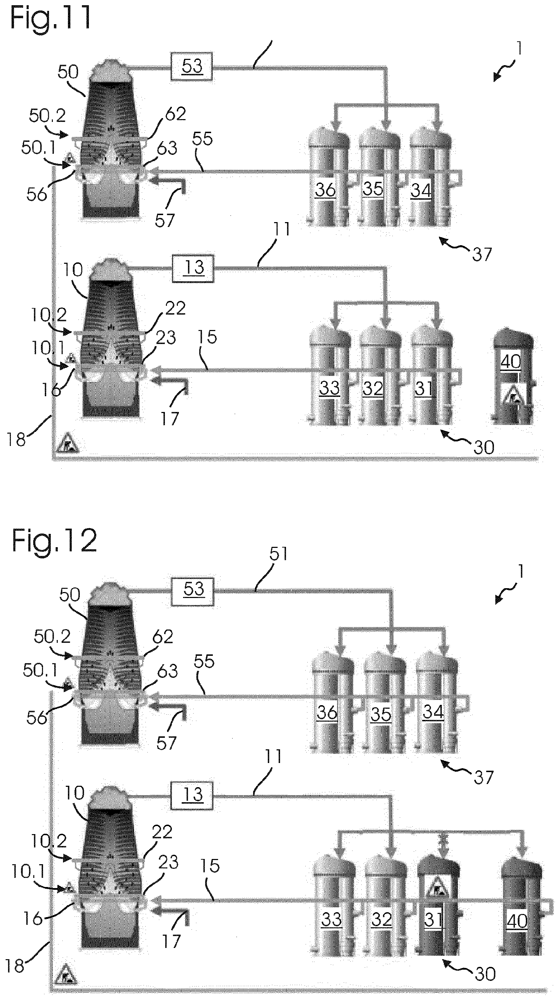

Figs 11-15 illustrate a third embodiment of the inventive method, by which the blast furnace plant 1 shown in Fig.10 can be converted. As can also be seen in Fig.11, a syngas supply system 18 is constructed, which is adapted for connecting the first syngas stove 40 to the first blast furnace 10 and the second blast furnace 50. Also, a first upper syngas injection system 22 is constructed at the shaft level 10.2 of the first blast furnace 10, a first lower syngas injection system 23 is constructed at the tuyere level 10.1 of the first blast furnace 10, a second upper syngas injection system 62 is constructed at the shaft level 50.2 of the second blast furnace 50 and a second lower syngas injection system 63 and is constructed at the tuyere level 50.1 of the second blast furnace 50. In the stage shown in Fig.11, the syngas supply system 18 is neither connected to any syngas injection system 22, 23, 62, 63 nor to any of the stoves 31-36, 40.

In a second stage that is shown in Fig.12, the first syngas stove 40 is connected to the first top-gas supply system 11, the first cold-blast supply system and the first hot-blast supply system 15 and is operated to generate hot blast. Meanwhile, the first original stove 31, which is part of the first group 30, is disconnected from the first top-gas supply system 11, the first cold-blast supply system and the first hot-blast supply system 15, whereafter it is converted to adapt it for syngas production.

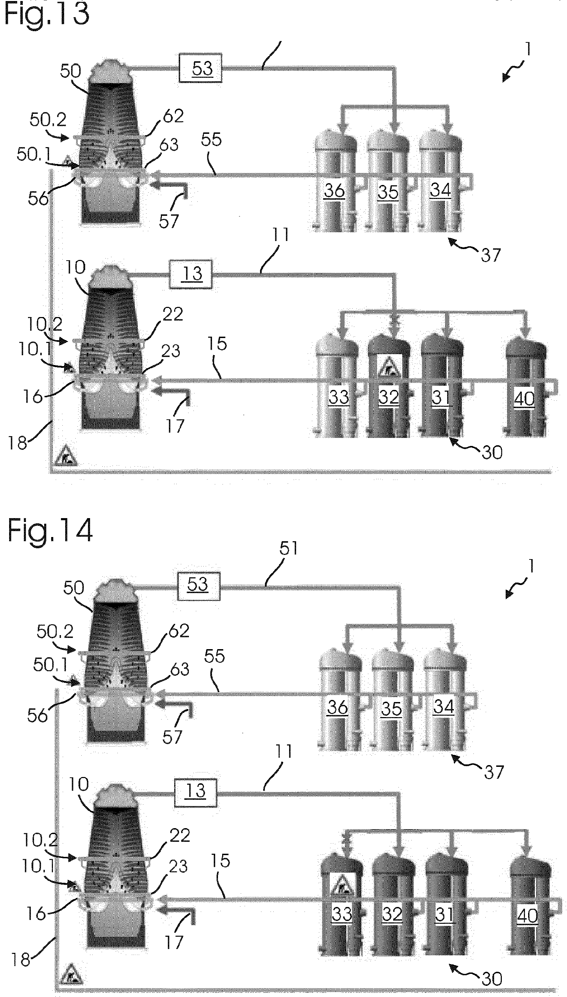

In a third stage that is shown in Fig.13, the first original stove 31, which has been converted, is re-connected to the first top-gas supply system 11, the first cold-blast supply system and the first hot-blast supply system 15 and is operated to generate hot blast. Meanwhile, the second original stove 32, which is also part of the first group 30, is disconnected from the first top-gas supply system 11, the first cold-blast supply system and the first hot-blast supply system 15, whereafter it is converted to adapt it for syngas production.

In a fourth stage (shown in Fig.14), the first original stove 31, which has been converted, is re-connected to the first top-gas supply system 11, the first cold-blast supply system and the first hot-blast supply system 15. Meanwhile, the third original stove 33 is disconnected from the top-gas supply system 11, the first cold-blast supply system and the first hot-blast supply system 15 and is converted to adapt it for syngas production.

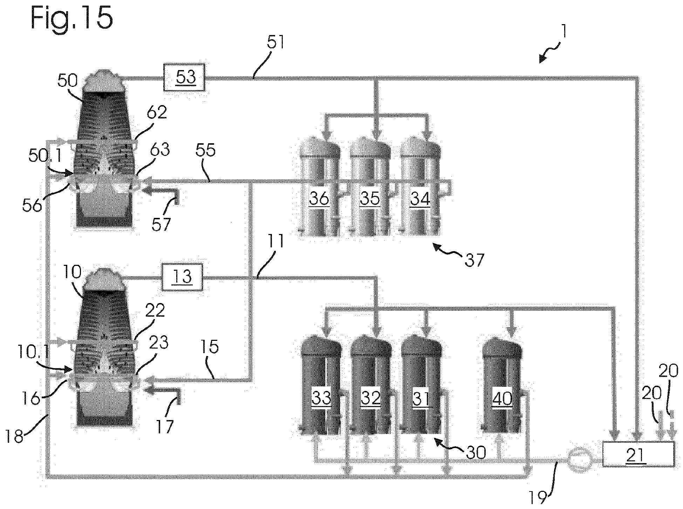

Fig.15 shows a final stage of the conversion process. The mixing chamber 21 is constructed and connected to the first and second top-gas supply system 11, 51 and the fuel-gas supply system 20. Also, the first original stove 31, the second original stove 32, the third original stove 33 and the first syngas stove 40 are connected to the syngas supply system 18 and via the gas-combination supply system 19 to the mixing chamber 21. The syngas supply system 18 is connected to the first upper and lower syngas injection system 22, 23 and the second upper and lower syngas injection system 62, 63. The first, second and third original stove 31-33 and the first syngas stove 40 are operated to produce syngas, which is supplied to both blast furnaces 10, 50 at the tuyere level 10.1, 50.1 via the syngas supply system 18 and the respective syngas injection system 22, 23, 62, 63. The first cold-blast supply system 14 and the first hot-blast supply system 15 are dismantled. Instead of the first hot-blast supply system 15, the second hot-blast supply system 55 is connected to the first hot-blast injection system 16. All original stoves 31-33 of the first group 30 have been converted and are operated to produce syngas, while all original stoves 34-36 of the second group 37 remain unchanged and are operated to generate hot blast.

While in the embodiment shown in Figs 11-15, there is a respective upper syngas injection system 22, 62 disposed at the shaft level 10.2, 50.2 and additionally a respective lower syngas injection system 23, 63 disposed at the tuyere level 10.1, 50.1, it would be possible to modify this embodiment so that at least one blast furnace 10, 50 only has a single the injection system 22, 23, 62, 63, which would be disposed either at the tuyere level 10.1, 50.1 or at the shaft level 10.2, 50.2 of the respective blast furnace 10, 50.

**Legend of Reference Numbers:**

| | | | |
|---|---|---|---|
| 1 | blast furnace plant | 18 | syngas supply system |
| 10, 50 | blast furnace | 19 | gas-combination supply system |
| 10.1, 50.1 | tuyere level | | |
| 10.2, 50.2 | shaft level | 20 | fuel-gas supply system |
| 11, 51 | top-gas supply system | 21 | mixing chamber |
| 13, 53 | gas-cleaning plant | 22, 23, 62, 63 | syngas injection system |
| 14 | cold-blast supply system | 30 | first group |
| 15, 55 | hot-blast supply system | 31-36 | original stove |
| 16, 56 | hot-blast injection system | 37 | second group |
| 17, 57 | oxygen supply system | 40, 41 | syngas stove |

## Claims

1. A method for converting a blast furnace plant (1), which initially comprises at least one blast furnace (10, 50), a plurality of original stoves (31-36) adapted for generating hot blast, a top-gas supply system (11, 51) for supplying top gas from at least one blast furnace (10, 50) to each original stove (31-36), a cold-blast supply system (14) for supplying cold blast to each original stove (31-36), a hot-blast supply system (15, 55) for supplying hot blast from each original stove (31-36) to a hot-blast injection system (16, 56), which is adapted to inject gas into at least one blast furnace (10, 50) at a tuyere level (10.1, 50.1), the method comprising:
- at least partially while operating the original stoves (31-36) to generate hot blast, constructing at least one syngas stove (40, 41), adapted to produce a syngas by reforming a gas combination of a CO₂-containing industrial gas and a hydrocarbon-containing fuel gas, and constructing a syngas supply system (18) adapted for connecting at least one syngas stove (40, 41) to at least one blast furnace (10, 50);
- connecting a first syngas stove (40) to the top-gas supply system (11, 51), the cold-blast supply system (14) and the hot-blast supply system (15, 55) and operating the first syngas stove (40) for hot blast generation;
- disconnecting a first original stove (31) from the top-gas supply system (11, 51), the cold-blast supply system (14) and the hot-blast supply system (15, 55);
- converting the first original stove (31) to adapt it for producing syngas by replacing its refractory lining and/or the support of its refractory lining and/or its mechanical components;
- connecting the first original stove (31) to the top-gas supply system (11, 51);
- disconnecting the first syngas stove (40) from the cold-blast supply system (14) and the hot-blast supply system (15, 55), connecting the first original stove (31) and the first syngas stove (40) to a gas-combination supply system (19) for supplying the gas combination and via the syngas supply system (18) to at least one blast furnace (10, 50); and
- operating the first original stove (31) and the first syngas stove (40) to produce syngas and supplying the syngas to the at least one blast furnace (10, 50) via the syngas supply system (18).

2. A method according to claim 1, **characterised in that** it comprises constructing a syngas injection system (22, 23, 62, 63) that is adapted to inject gas into at least one blast furnace (10, 50) and connecting the syngas supply system (18) to the syngas injection system (22, 23, 62, 63).

3. A method according to claim 2, **characterised in that** constructing the syngas injection system (22, 23, 62, 63) comprises at least partially converting the hot blast injection system (16, 56) to adapt it for syngas injection.

4. A method according to any of the preceding claims, **characterised in that** the syngas injection system (22, 23, 62, 63) is adapted to inject gas at the tuyere level (10.1, 50.1) and/or at a shaft level (10.2, 50.2) above the tuyere level (10.1, 50.1).

5. A method according to any of claims 2 to 4, **characterised in that** the syngas injection system (22, 23, 62, 63) is at least partially constructed during operation of the at least one blast furnace (10, 50).

6. A method according to any of the preceding claims, **characterised in that** at least one of the following steps is performed during a shutdown of at least one blast furnace (10, 50):
- connecting a syngas stove (40, 41) to the top-gas supply system (11, 51), the cold-blast supply system (14) and the hot-blast supply system (15, 55);
- connecting a stove (31-36, 40, 41) to the syngas supply system (18); and
- connecting the syngas injection system (22, 23, 62, 63) to the at least one blast furnace (10, 50).

7. A method according to any of the preceding claims, **characterised in that** it comprises the following steps:
- connecting a second syngas stove (41) to the top-gas supply system (11, 51), the cold-blast supply system (14) and the hot-blast supply system (15, 55); and
- operating the second syngas stove (41), along with the first syngas stove (40) and the first original stove (31), to produce syngas and supplying the syngas to the at least one blast furnace (10, 50) via the syngas supply system (18).

8. A method according to claim 7, **characterised in that** the second syngas stove (41) is constructed after operation of the first syngas stove (40) to generate hot blast has started.

9. A method according to any of the preceding claims, **characterised in that** it comprises, after converting the first original stove (31):
- connecting the first original stove (31) to the top-gas supply system (11, 51), the cold-blast supply system (14) and the hot-blast supply system (15, 55);
- disconnecting a second original stove (32) from the top-gas supply system (11, 51), the cold-blast supply system (14) and the hot-blast supply system (15, 55);
- converting the second original stove (32) to adapt it for producing syngas;
- at least while the second original stove (32) is being converted, operating the first original stove (31) and the first syngas stove (40) to generate hot blast;
- disconnecting the first syngas stove (40) and the first original stove (31) from the cold-blast supply system (14) and the hot-blast supply system (15, 55), connecting the first original stove (31), the second original stove (32) and the first syngas stove (40) to the gas-combination supply system (19) and via the syngas supply system (18) to the at least one blast furnace (10, 50); and
- operating the first original stove (31), the second original stove (32) and the first syngas stove (40) to produce syngas and supplying the syngas to the at least one blast furnace (10, 50) via the syngas supply system (18).

10. A method according to any of the preceding claims, **characterised in that** it comprises the following steps:
- disconnecting a third original stove (33) from the top-gas supply system (11, 51), the cold-blast supply system (14) and the hot-blast supply system (15, 55);
- converting the third original stove (33) to adapt it for producing syngas;
- connecting the third original stove (33) to the gas-combination supply system (19) and via the syngas supply system (18) to the at least one blast furnace (10, 50); and
- operating the third original stove (33) to produce syngas and supplying the syngas to the at least one blast furnace (10, 50) via the syngas supply system (18).

11. A method according to any of the preceding claims, **characterised in that** it comprises constructing a mixing chamber (21) and connecting the mixing chamber (21) to a fuel-gas supply system (20) for supplying the fuel gas and to the gas-combination supply system (19).

12. A method according to claim 11, **characterised in that** it comprises connecting the top-gas supply system (11, 51) to the mixing chamber (21) and supplying the top gas from a blast furnace (10, 50) as the industrial gas to the mixing chamber (21).

13. A method according to any of the preceding claims, **characterised in that** all original stoves (31-36) are converted to adapt them for producing syngas.

14. A method according to any of the preceding claims, **characterised in that** the blast furnace plant (1) comprises a first blast furnace (10) connected to a first group (30) of original stoves (31-36) via a first hot-blast supply system (15) and a first top-gas supply system (11) and a second blast furnace (50) connected to a second group (37) of original stoves (31-36) via a second hot-blast supply system (55) and a second top-gas supply system (51), and the method comprises:
- connecting the first syngas stove (40) to at least one of the first top-gas supply system (11) and the second top-gas supply system (51);
- converting all original stoves (31-33) of the first group (30) and connecting them to the gas-combination supply system (19) and the syngas supply system (18);
- connecting the second hot-blast supply system (55) to the first blast furnace (10);
- connecting the syngas supply system (18) to the first blast furnace (10) and the second blast furnace (50).

15. A method according to any of the preceding claims, **characterised in that** after finishing converting, all original stoves (31-33) of the first group (30) are operated to produce syngas while all original stoves (34-36) of the second group (37) are operated to generate hot blast.

## Patentansprüche

1. Verfahren zum Umwandeln einer Hochofenanlage (1), die anfänglich mindestens einen Hochofen (10, 50), eine Vielzahl von ursprünglichen Winderhitzern (31-36), die dazu geeignet sind, Heißwind zu erzeugen, ein Gichtgaszufuhrsystem (11, 51) zum Zuführen von Gichtgas von mindestens einem Hochofen (10, 50) zu jedem ursprünglichen Winderhitzer (31-36), ein Zufuhrsystem (14) für Kaltwind zum Zuführen von Kaltwind zu jedem ursprünglichen Winderhitzer (31-36), ein Zufuhrsystem (15, 55) für Heißwind zum Zuführen von Heißwind von jedem ursprünglichen Winderhitzer (31-36) zu einem Einspritzsystem (16, 56) für Heißwind, das dazu geeignet ist, Gas in mindestens einen Hochofen (10, 50) auf Höhe einer Düse (10.1, 50.1) einzuspritzen, umfasst, wobei das Verfahren Folgendes umfasst:
- zumindest teilweise während des Betreibens der ursprünglichen Winderhitzer (31-36), um Heißwind zu erzeugen, Errichten mindestens eines Synthesegaswinderhitzers (40, 41), der dazu geeignet ist, durch Reformieren einer Gaskombination aus einem CO₂-haltigen Industriegas und einem Kohlenwasserstoff enthaltenden Brenngas ein Synthesegas zu produzieren, und Errichten eines Synthesegaszufuhrsystems (18), das dafür geeignet ist, mindestens einen Synthesegaswinderhitzer (40, 41) mit mindestens einem Hochofen (10, 50) zu verbinden;
- Verbinden eines ersten Synthesegaswinderhitzers (40) mit dem Gichtgaszufuhrsystem (11, 51), dem Zufuhrsystem (14) für Kaltwind und dem Zufuhrsystem (15, 55) für Heißwind und Betreiben des ersten Synthesegaswinderhitzers (40) zur Erzeugung von Heißwind;
- Trennen eines ersten ursprünglichen Winderhitzers (31) von dem Gichtgaszufuhrsystem (11, 51), dem Zufuhrsystem (14) für Kaltwind und dem Zufuhrsystem (15, 55) für Heißwind;
- Umwandeln des ersten ursprünglichen Winderhitzers (31), um ihn für das Produzieren von Synthesegas anzupassen, indem seine feuerfeste Auskleidung und/oder der Träger seiner feuerfesten Auskleidung und/oder seine mechanischen Komponenten ersetzt werden;
- Verbinden des ersten ursprünglichen Winderhitzers (31) mit dem Gichtgaszufuhrsystem (11, 51);
- Trennen des ersten Synthesegaswinderhitzers (40) von dem Zufuhrsystem (14) für Kaltwind und dem Zufuhrsystem (15, 55) für Heißwind; Verbinden des ersten ursprünglichen Winderhitzers (31) und des ersten Synthesegaswinderhitzers (40) mit einem Gaskombinationszufuhrsystem (19) zum Zuführen der Gaskombination und über das Synthesegaszufuhrsystem (18) mit mindestens einem Hochofen (10, 50); und
- Betreiben des ersten ursprünglichen Winderhitzers (31) und des ersten Synthesegaswinderhitzers (40), um Synthesegas zu produzieren, und Zuführen des Synthesegases zu dem mindestens einen Hochofen (10, 50), über das Synthesegaszufuhrsystem (18).

2. Verfahren nach Anspruch 1, **dadurch gekennzeichnet, dass** es das Errichten eines Synthesegaseinspritzsystems (22, 23, 62, 63) umfasst, das dazu geeignet ist, Gas in mindestens einen Hochofen (10, 50) einzuspritzen, und das Verbinden des Synthesegaszufuhrsystems (18) mit dem Synthesegaseinspritzsystem (22, 23, 62, 63) umfasst.

3. Verfahren nach Anspruch 2, **dadurch gekennzeichnet, dass** das Errichten des Synthesegaseinspritzsystems (22, 23, 62, 63) das zumindest teilweise Umwandeln des Einspritzsystems (16, 56) für Heißwind umfasst, um es für die Synthesegaseinspritzung anzupassen.

4. Verfahren nach einem der vorhergehenden Ansprüche, **dadurch gekennzeichnet, dass** das Synthesegaseinspritzsystem (22, 23, 62, 63) dazu geeignet ist, Gas auf Düsenebene (10.1, 50.1) und/oder auf Schachtebene (10.2, 50.2) über der Düsenebene (10.1, 50.1) einzuspritzen.

5. Verfahren nach einem der Ansprüche 2 bis 4, **dadurch gekennzeichnet, dass** das Synthesegaseinspritzsystem (22, 23, 62, 63) zumindest teilweise während des Betriebs des mindestens einen Hochofens (10, 50) errichtet wird.

6. Verfahren nach einem der vorhergehenden Ansprüche, **dadurch gekennzeichnet, dass** mindestens einer der folgenden Schritte während eines Abschaltens mindestens eines Hochofens (10, 50) durchgeführt wird:
- Verbinden eines Synthesegaswinderhitzers (40, 41) mit dem Gichtgaszufuhrsystem (11, 51), dem Zufuhrsystem (14) für Kaltwind und dem Zufuhrsystem (15, 55) für Heißwind;
- Verbinden eines Ofens (31-36, 40, 41) mit dem Synthesegaszufuhrsystem (18); und
- Verbinden des Synthesegaseinspritzsystems (22, 23, 62, 63) mit dem mindestens einen Hochofen (10, 50).

7. Verfahren nach einem der vorhergehenden Ansprüche, **dadurch gekennzeichnet, dass** es die folgenden Schritte umfasst:
- Verbinden eines zweiten Synthesegaswinderhitzers (41) mit dem Gichtgaszufuhrsystem (11, 51), dem Zufuhrsystem (14) für Kaltwind und dem Zufuhrsystem (15, 55) für Heißwind; und
- Betreiben des zweiten Synthesegaswinderhitzers (41) zusammen mit dem ersten Synthesegaswinderhitzer (40) und dem ersten ursprünglichen Winderhitzer (31), um Synthesegas zu produzieren und das Synthesegas zu dem mindestens einen Hochofen (10, 50) über das Synthesegaszufuhrsystem (18) zuzuführen.

8. Verfahren nach Anspruch 7, **dadurch gekennzeichnet, dass** der zweite Synthesegaswinderhitzer (41) errichtet wird, nachdem der Betrieb des ersten Synthesegaswinderhitzers (40), um Heißwind zu erzeugen, gestartet wurde.

9. Verfahren nach einem der vorhergehenden Ansprüche, **dadurch gekennzeichnet, dass** es, nach dem Umwandeln des ersten ursprünglichen Winderhitzers (31), Folgendes umfasst:
- Verbinden des ersten ursprünglichen Winderhitzers (31) mit dem Gichtgaszufuhrsystem (11, 51), dem Zufuhrsystem (14) für Kaltwind und dem Zufuhrsystem (15, 55) für Heißwind;
- Trennen eines zweiten ursprünglichen Winderhitzers (32) von dem Gichtgaszufuhrsystem (11, 51), dem Zufuhrsystem (14) für Kaltwind und dem Zufuhrsystem (15, 55) für Heißwind;
- Umwandeln des zweiten ursprünglichen Winderhitzers (32), um ihn für das Produzieren von Synthesegas anzupassen;
- zumindest während der zweite ursprüngliche Winderhitzer (32) gerade umgewandelt wird, Betreiben des ersten ursprünglichen Winderhitzers (31) und des ersten Synthesegaswinderhitzers (40), um Heißwind zu erzeugen;
- Trennen des ersten Synthesegaswinderhitzers (40) und des ersten ursprünglichen Winderhitzers (31) von dem Zufuhrsystem (14) für Kaltwind und dem Zufuhrsystem (15, 55) für Heißwind; Verbinden des ersten ursprünglichen Winderhitzers (31), des zweiten ursprünglichen Winderhitzers (32) und des ersten Synthesegaswinderhitzers (40) mit dem Gaskombinationszufuhrsystem (19) und über das Synthesegaszufuhrsystem (18) mit dem mindestens einen Hochofen (10, 50); und
- Betreiben des ersten ursprünglichen Winderhitzers (31), des zweiten ursprünglichen Winderhitzers (32) und des ersten Synthesegaswinderhitzers (40), um Synthesegas zu produzieren, und Zuführen des Synthesegases zu dem mindestens einen Hochofen (10, 50) über das Synthesegaszufuhrsystem (18).

10. Verfahren nach einem der vorhergehenden Ansprüche, **dadurch gekennzeichnet, dass** es die folgenden Schritte umfasst:
- Trennen eines dritten ursprünglichen Winderhitzers (33) von dem Gichtgaszufuhrsystem (11, 51), dem Zufuhrsystem (14) für Kaltwind und dem Zufuhrsystem (15, 55) für Heißwind;
- Umwandeln des dritten ursprünglichen Winderhitzers (33), um ihn für das Produzieren von Synthesegas anzupassen;
- Verbinden des dritten ursprünglichen Winderhitzers (33) mit dem Gaskombinationszufuhrsystem (19) und über das Synthesegaszufuhrsystem (18) mit dem mindestens einen Hochofen (10, 50); und
- Betreiben des dritten ursprünglichen Winderhitzers (33), um Synthesegas zu produzieren, und Zuführen des Synthesegases zu dem mindestens einen Hochofen (10, 50) über das Synthesegaszufuhrsystem (18).

11. Verfahren nach einem der vorhergehenden Ansprüche, **dadurch gekennzeichnet, dass** es das Errichten einer Mischkammer (21) und das Verbinden der Mischkammer (21) mit einem Brenngaszufuhrsystem (20) zum Zuführen des Brenngases zu dem Gaskombinationszufuhrsystem (19) umfasst.

12. Verfahren nach Anspruch 11, **dadurch gekennzeichnet, dass** es das Verbinden des Gichtgaszufuhrsystems (11, 51) mit der Mischkammer (21) und das Zuführen des Gichtgases von einem Hochofen (10, 50) als das Industriegas zur Mischkammer (21) umfasst.

13. Verfahren nach einem der vorhergehenden Ansprüche, **dadurch gekennzeichnet, dass** alle ursprünglichen Winderhitzer (31-36) umgewandelt werden, um sie für das Produzieren von Synthesegas anzupassen.

14. Verfahren nach einem der vorhergehenden Ansprüche, **dadurch gekennzeichnet, dass** die Hochofenanlage (1) einen ersten Hochofen (10), der mit einer ersten Gruppe (30) von ursprünglichen Winderhitzern (31-36) über ein erstes Zufuhrsystem (15) für Heißwind und ein erstes Gichtgaszufuhrsystem (11) verbunden ist, und einen zweiten Hochofen (50), der mit einer zweiten Gruppe (37) von ursprünglichen Winderhitzern (31-36) über ein zweites Zufuhrsystem (55) für Heißwind und ein zweites Gichtgaszufuhrsystem (51) verbunden ist umfasst, und wobei das Verfahren Folgendes umfasst:
- Verbinden des ersten Synthesegaswinderhitzers (40) mit mindestens einem von dem ersten Gichtgaszufuhrsystem (11) und dem zweiten Gichtgaszufuhrsystem (51);
- Umwandeln aller ursprünglichen Winderhitzer (31-33) der ersten Gruppe (30) und Verbinden von diesen mit dem Gaskombinationszufuhrsystem (19) und dem Synthesegaszufuhrsystem (18);
- Verbinden des zweiten Zufuhrsystems (55) für Heißwind mit dem ersten Hochofen (10);
- Verbinden des Synthesegaszufuhrsystems (18) mit dem ersten Hochofen (10) und dem zweiten Hochofen (50).

15. Verfahren nach einem der vorhergehenden Ansprüche, **dadurch gekennzeichnet, dass** nach Abschluss des Umwandelns alle ursprünglichen Winderhitzer (31-33) der ersten Gruppe (30) betrieben werden, um Synthesegas zu produzieren, während alle ursprünglichen Winderhitzer (34-36) der zweiten Gruppe (37) betrieben werden, um Heißwind zu erzeugen.

## Revendications

1. Procédé de conversion d'une installation de haut fourneau (1), qui comprend initialement au moins un haut fourneau (10, 50), une pluralité de cowpers d'origine (31-36) conçus pour générer un vent chaud, un système d'alimentation en gaz de gueulard (11, 51) pour alimenter chaque cowper d'origine (31-36) en gaz de gueulard à partir d'au moins un haut fourneau (10, 50), un système d'alimentation en vent froid (14) pour alimenter un vent froid à chaque cowper d'origine (31-36), un système d'alimentation en vent chaud (15, 55) pour alimenter un vent chaud à partir de chaque cowper d'origine (31-36) à un système d'injection de vent chaud (16, 56), qui est conçu pour injecter du gaz dans au moins un haut fourneau (10, 50) à un niveau de tuyère (10.1, 50.1), le procédé comprenant :
- au moins partiellement, lors du fonctionnement des cowpers d'origine (31-36) pour générer du vent chaud, la construction d'au moins un cowper de gaz de synthèse (40, 41), conçu pour produire un gaz de synthèse par reformage d'une combinaison de gaz d'un gaz industriel contenant du CO₂ et d'un gaz combustible contenant des hydrocarbures, et la construction d'un système d'alimentation en gaz de synthèse (18) conçu pour raccorder au moins un cowper de gaz de synthèse (40, 41) à au moins un haut fourneau (10, 50) ;
- le raccordement d'un premier cowper de gaz de synthèse (40) au système d'alimentation en gaz de gueulard (11, 51), au système d'alimentation en vent froid (14) et au système d'alimentation en vent chaud (15, 55) et le fonctionnement du premier cowper de gaz de synthèse (40) pour la génération de vent chaud ;
- la déconnexion d'un premier cowper d'origine (31) du système d'alimentation en gaz de gueulard (11, 51), du système d'alimentation en vent froid (14) et du système d'alimentation en vent chaud (15, 55) ;
- la conversion du premier cowper d'origine (31) pour l'adapter à la production de gaz de synthèse par remplacement de son revêtement réfractaire et/ou du support de son revêtement réfractaire et/ou de ses composants mécaniques ;
- le raccordement du premier cowper d'origine (31) au système d'alimentation en gaz de gueulard (11, 51) ;
- la déconnexion du premier cowper de gaz de synthèse (40) du système d'alimentation en vent froid (14) et du système d'alimentation en vent chaud (15, 55), le raccordement du premier cowper d'origine (31) et du premier cowper de gaz de synthèse (40) à un système d'alimentation en combinaison de gaz (19) pour alimenter la combinaison de gaz et via le système d'alimentation en gaz de synthèse (18) à au moins un haut fourneau (10, 50) ; et
- le fonctionnement du premier cowper d'origine (31) et du premier cowper de gaz de synthèse (40) pour produire du gaz de synthèse et alimenter le gaz de synthèse audit au moins un haut fourneau (10, 50) via le système d'alimentation en gaz de synthèse (18).

2. Procédé selon la revendication 1, **caractérisé en ce qu'**il comprend la construction d'un système d'injection de gaz de synthèse (22, 23, 62, 63) qui est conçu pour injecter du gaz dans au moins un haut fourneau (10, 50) et le raccordement du système d'alimentation en gaz de synthèse (18) au système d'injection de gaz de synthèse (22, 23, 62, 63).

3. Procédé selon la revendication 2, **caractérisé en ce que** la construction du système d'injection de gaz de synthèse (22, 23, 62, 63) comprend au moins une conversion partielle du système d'injection de vent chaud (16, 56) pour l'adapter à l'injection de gaz de synthèse.

4. Procédé selon l'une quelconque des revendications précédentes, **caractérisé en ce que** le système d'injection de gaz de synthèse (22, 23, 62, 63) est conçu pour injecter du gaz au niveau de la tuyère (10.1, 50.1) et/ou au niveau de la cuve (10.2, 50.2) au-dessus du niveau de la tuyère (10.1, 50.1).

5. Procédé selon l'une quelconque des revendications 2 à 4, **caractérisé en ce que** le système d'injection de gaz de synthèse (22, 23, 62, 63) est au moins partiellement construit pendant le fonctionnement de l'au moins un haut fourneau (10, 50).

6. Procédé selon l'une quelconque des revendications précédentes, **caractérisé en ce que** au moins l'une des étapes suivantes est effectuée pendant un arrêt d'au moins un haut fourneau (10, 50) :
- le raccordement d'un cowper de gaz de synthèse (40, 41) au système d'alimentation en gaz de gueulard (11, 51), au système d'alimentation en vent froid (14) et au système d'alimentation en vent chaud (15, 55) ;
- le raccordement d'un cowper (31-36, 40, 41) au système d'alimentation en gaz de synthèse (18) ; et
- le raccordement du système d'injection de gaz de synthèse (22, 23, 62, 63) audit au moins un haut fourneau (10, 50).

7. Procédé selon l'une quelconque des revendications précédentes, **caractérisé en ce qu'**il comprend les étapes suivantes :
- le raccordement d'un deuxième cowper de gaz de synthèse (41) au système d'alimentation en gaz de gueulard (11, 51), au système d'alimentation en vent froid (14) et au système d'alimentation en vent chaud (15, 55) ; et
- le fonctionnement du deuxième cowper de gaz de synthèse (41), ainsi que du premier cowper de gaz de synthèse (40) et du premier cowper d'origine (31), pour produire du gaz de synthèse et l'alimentation du gaz de synthèse audit au moins un haut fourneau (10, 50) via le système d'alimentation en gaz de synthèse (18).

8. Procédé selon la revendication 7, **caractérisé en ce que** le deuxième cowper de gaz de synthèse (41) est construit après le début du fonctionnement du premier cowper de gaz de synthèse (40) pour générer un vent chaud.

9. Procédé selon l'une quelconque des revendications précédentes, **caractérisé en ce qu'**il comprend, après la conversion du premier cowper d'origine (31) :
- le raccordement du premier cowper d'origine (31) au système d'alimentation en gaz de gueulard (11, 51), au système d'alimentation en vent froid (14) et au système d'alimentation en vent chaud (15, 55) ;
- la déconnexion d'un deuxième cowper d'origine (32) du système d'alimentation en gaz de gueulard (11, 51), du système d'alimentation en vent froid (14) et du système d'alimentation en vent chaud (15, 55) ;
- la conversion du deuxième cowper d'origine (32) pour l'adapter à la production de gaz de synthèse ;
- au moins pendant la conversion du deuxième cowper d'origine (32), le fonctionnement du premier cowper d'origine (31) et du premier cowper de gaz de synthèse (40) pour générer un vent chaud ;
- la déconnexion du premier cowper de gaz de synthèse (40) et du premier cowper d'origine (31) du système d'alimentation en vent froid (14) et du système d'alimentation en vent chaud (15, 55), le raccordement du premier cowper d'origine (31), du deuxième cowper d'origine (32) et du premier cowper de gaz de synthèse (40) au système d'alimentation en combinaison de gaz (19) et via le système d'alimentation en gaz de synthèse (18) audit au moins un haut fourneau (10, 50) ; et
- le fonctionnement du premier cowper d'origine (31), du deuxième cowper d'origine (32) et du premier cowper de gaz de synthèse (40) pour produire du gaz de synthèse et l'alimentation du gaz de synthèse audit au moins un haut fourneau (10, 50) via le système d'alimentation en gaz de synthèse (18).

10. Procédé selon l'une quelconque des revendications précédentes, **caractérisé en ce qu'**il comprend les étapes suivantes :
- la déconnexion d'un troisième cowper d'origine (33) du système d'alimentation en gaz de gueulard (11, 51), du système d'alimentation en vent froid (14) et du système d'alimentation en vent chaud (15, 55) ;
- la conversion du troisième cowper d'origine (33) pour l'adapter à la production de gaz de synthèse ;
- le raccordement du troisième cowper d'origine (33) au système d'alimentation en combinaison de gaz (19) et via le système d'alimentation en gaz de synthèse (18) audit au moins un haut fourneau (10, 50) ; et
- le fonctionnement du troisième cowper d'origine (33) pour produire du gaz de synthèse et l'alimentation du gaz de synthèse audit au moins un haut fourneau (10, 50) via le système d'alimentation en gaz de synthèse (18).

11. Procédé selon l'une quelconque des revendications précédentes, **caractérisé en ce qu'**il comprend la construction d'une chambre de mélange (21) et le raccordement de la chambre de mélange (21) à un système d'alimentation en gaz combustible (20) destiné à l'alimentation du gaz combustible et au système d'alimentation en combinaison de gaz (19).

12. Procédé selon la revendication 11, **caractérisé en ce qu'**il comprend le raccordement du système d'alimentation en gaz de gueulard (11, 51) à la chambre de mélange (21) et l'alimentation du gaz de gueulard à partir d'un haut fourneau (10, 50) en tant que gaz industriel à la chambre de mélange (21).

13. Procédé selon l'une quelconque des revendications précédentes, **caractérisé en ce que** tous les cowpers d'origine (31-36) sont convertis pour les adapter à la production de gaz de synthèse.

14. Procédé selon l'une quelconque des revendications précédentes, **caractérisé en ce que** l'installation de haut fourneau (1) comprend un premier haut fourneau (10) raccordé à un premier groupe (30) de cowpers d'origine (31-36) via un premier système d'alimentation en vent chaud (15) et un premier système d'alimentation en gaz de gueulard (11) et un deuxième haut fourneau (50) raccordé à un deuxième groupe (37) de cowpers d'origine (31-36) via un deuxième système d'alimentation en vent chaud (55) et un deuxième système d'alimentation en gaz de gueulard (51), et le procédé comprend :
- le raccordement du premier cowper de gaz de synthèse (40) à au moins un du premier système d'alimentation en gaz de gueulard (11) et du deuxième système d'alimentation en gaz de gueulard (51) ;
- la conversion de tous les cowpers d'origine (31-33) du premier groupe (30) et leur raccordement au système d'alimentation en combinaison de gaz (19) et au système d'alimentation en gaz de synthèse (18) ;
- le raccordement du deuxième système d'alimentation en vent chaud (55) au premier haut fourneau (10) ;
- le raccordement du système d'alimentation en gaz de synthèse (18) au premier haut fourneau (10) et au deuxième haut fourneau (50).

15. Procédé selon l'une quelconque des revendications précédentes, **caractérisé en ce que**, une fois la conversion terminée, tous les cowpers d'origine (31-33) du premier groupe (30) sont utilisés pour produire du gaz de synthèse tandis que tous les cowpers d'origine (34-36) du deuxième groupe (37) sont utilisés pour générer un vent chaud.
